# EUROPÄISCHE PATENTSCHRIFT

(11) **EP 1 908 521 B1**
(45) Veröffentlichungstag und Bekanntmachung des Hinweises auf die Patenterteilung: **28.07.2010**
(21) Anmeldenummer: 07116916.3
(22) Anmeldetag: 21.09.2007
(51) Int. Cl.: B01J 41/14, C02F 1/42, B01J 41/04

(54) **Wärmestabile Anionenaustauscher**
Heat resistent anion exchanger
Echangeurs d'anions thermiquement stables

(30) Priorität: 27.09.2006 DE 102006045504
(43) Veröffentlichungstag der Anmeldung: 09.04.2008
(73) Patentinhaber: LANXESS Deutschland GmbH, 51369 Leverkusen (DE)
(72) Erfinder: Vanhoorne, Pierre, 40789, Monheim (DE); Podszun, Wolfgang, 80469, München (DE); Klipper, Reinhold, 50933, Köln (DE); Schelhaas, Michael, 50733, Köln (DE)

(56) Entgegenhaltungen:
- EP-A- 0 670 184
- EP-A- 1 029 847

## Beschreibung

Die vorliegende Erfindung betrifft wärmestabile Anionenaustauscher auf Basis wenigstens eines aromatischen Monomers und wenigstens eines Vernetzers enthaltend die Strukturelemente der allgemeinen Formel (I) 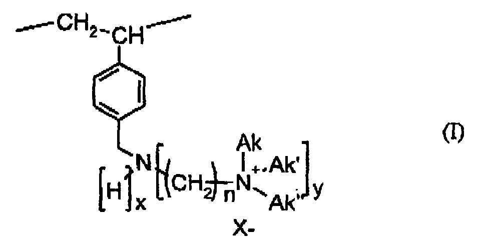 worin
- Ak, Ak', Ak": jeweils unabhängig voneinander, gleich oder verschieden für einen C₁-C₁₈-Alkyl- rest stehen,
- n: für eine gerade Zahl zwischen 5 und 18 steht,
x+y=2 und
- X: für Cl, Br, OH, HCO₃, HSO₄, ½ (SO₄), ½ CO₃, NO₃, F, H₂PO₄, ½ HPO₄, ½ PO₄ steht,
erhältlich durch Umsetzung nicht funktioneller polyvinylaromatischer Perlpolymerisate mit Phthalimidderivaten unter Nutzung von Oleum, Schwefelsäure oder Schwefeltrioxid als Katalysator, Abspalten des Phthalsäurerestes, anschließender Alkylierung der erhaltenen aminomethylierten, vernetzten Perlpolymerisate mit ω-funktionellen Alkylwmnoniumsalzen der allgemeinen Formel (II) 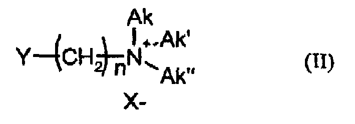 worin
- n: für eine ganze Zahl zwischen 5 und 18 steht,
- Y: für Br, Cl, I oder (SO₄)_{1/2} steht,
- X⁻: für ein geeignetes Gegenion wie z.B. Cl⁻, Br, I⁻, (SO₄²⁻)_{1/2}, NO₃', HCO₃⁻ steht und
- Ak, Ak', Ak": jeweils unabhängig voneinander, gleich oder verschieden für eine lineare oder ver- zweigte Alkylgruppe mit 1 bis 18 Kohlenstoffatomen, mit oder ohne funktionellen Gruppen, stehen
und Umladung mit verschiedenen Laugen, Säuren und Salzen in die gewünschte Form mit der Folge, dass diese Anionenaustauscher, bevorzugt in der OH-Form, eine Betriebstemperatur von mindestens 60 °C, bevorzugt mindestens 80 °C über längere Zeit aushalten, ein Verfahren zu ihrer Herstellung sowie deren Verwendungen. Ein längerer Zeitraum im Sinne der vorliegenden Erfindung sind 1 bis 12 Monate, bevorzugt 1 bis 10 Monate, besonders bevorzugt 1 bis 8 Monate.

Ionenaustauscher werden in vielen Bereichen eingesetzt, wie z.B. zur Enthärtung des Wassers, zur Entsalzung und Aufreinigung von wässrigen Lösungen, zur Abtrennung und Aufreinigung von Zucker- und Aminosäurelösungen und zur Herstellung von hochreinem Wasser in der Elektronik- und Pharmaindustrie. Allerdings können die konventionellen Anionenaustauscher nicht unter extremen Temperaturbedingungen eingesetzt werden. Insbesondere lässt ihre thermische Stabilität zu wünschen übrig. Will man einen vorzeitigen Abbau der funktionellen Gruppen vermeiden, so darf die maximale Temperatur für einen Dauereinsatz nicht höher als 60 °C sein. Sogar bei Raumtemperatur ist bei konventionellen Harzen ein gewisser Abbau des Harzes und die Freisetzung der Harzbestandteile in die umgebende Lösung - das so genannte Leaching - unvermeidbar.

Für bestimmte Anwendungen mit hohen Betriebstemperaturen im Bereich über 60 °C werden Anionenaustauscher benötigt, die diese erhöhten Temperaturen über einen längeren Zeitraum aushalten. Solche Bedingungen kommen z.B. vor bei der Entsalzung im Wärmetauschkreislauf von verschiedenen Maschinen und Anlagen wie z.B. Motoren und Kraftwerken (konventionell und nuklear). In solchen Anwendungen werden die Anionenaustauscher meistens in Kombination mit einem Kationenaustauscher, auch gemischt in so genannten Mischbetten, eingesetzt. Um die Aufgabe der Entsalzung erfüllen zu können, müssen die Anionenaustauscher mit OH- als Gegenion (so genannte OH-Form) eingesetzt werden.

Aus EP 0 309 861 A2 und EP 1 078 690 A2 sind Anionenaustauscher bzw. Chelataustauscher mit ähnlichem Strukturelement bekannt, worin allerdings Y den Wert 0 annimmt.

EP-A 0 444 643 und JP-A 2003 230881 erwähnen Anionenaustauscherharze, die in der OH-Form bei höheren Temperaturen eingesetzt werden können. Der Herstellweg dieser thermisch stabilen Harze geht über eine aufwändige Chemie, die mit niedrigen Ausbeuten verbunden ist. Dadurch ist die Verfügbarkeit dieser Harze in technischen Mengen nicht gewährleistet.

Aufgabe der vorliegenden Erfindung war deshalb die Synthese perlförmiger Anionenaustauscher, die eine Betriebstemperatur von mindestens 60 °C, bevorzugt mindestens 80 °C über längere Zeit aushalten, in technischen Mengen verfügbar zu machen.

Die Lösung der Aufgabe und Gegenstand der vorliegenden Erfindung sind Anionenaustauscher in Perlform auf Basis wenigstens eines aromatischen Monomers und wenigstens eines Vernetzers enthaltend die Strukturelemente der allgemeinen Formel (I) 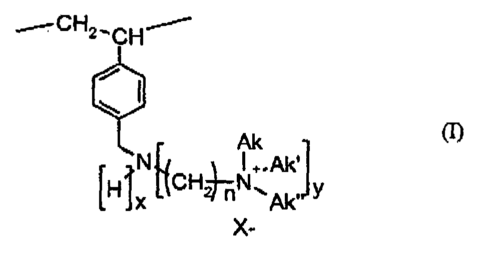 worin
- Ak, Ak', Ak": jeweils unabhängig voneinander, gleich oder verschieden für einen C₁-C₁₈-Alkyl- rest stehen,
- n: für eine gerade Zahl zwischen 5 und 18 steht,
x+y=2 und
- X: für Cl, Br, OH, HCO₃, HSO₄, ½ (SO₄), ½ CO₃, NO₃, F, H₂PO₄, ½ HPO₄, ⅓ PO₄ steht,
erhältlich durch Umsetzung nicht funktioneller polyvinylaromatischer Perlpolymerisate mit Phthalimidderivaten unter Nutzung von Oleum, Schwefelsäure oder Schwefeltrioxid als Katalysator, Abspalten des Phthalsäurerestes, anschließender Alkylierung der erhaltenen aminomethylierten, vernetzten Perlpolymerisate mit ω-funktionellen Alkylammoniumsalzen der allgemeinen Formel (II) 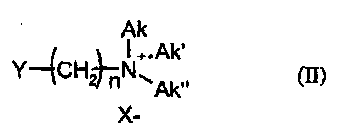 worin
- n: für eine ganze Zahl zwischen 5 und 18 steht,
- Y: für Br, Cl, I oder (SO₄)_{1/2} steht,
- X⁻: für ein geeignetes Gegenion wie z.B. Cl⁻, Br⁻, I⁻, (SO₄²⁻)ₘ, NO₃⁻, HCO₃⁻ steht und
- Ak, Ak', Ak": jeweils unabhängig voneinander, gleich oder verschieden für eine lineare oder ver- zweigte Alkylgruppe mit 1 bis 18 Kohlenstoffatomen, mit oder ohne funktionellen Gruppen, stehen
und Umladung mit verschiedenen Laugen, Säuren und Salzen in die gewünschte Form.

Überraschenderweise zeigen die erfindungsgemäßen Anionenaustauscher besonders thermostabile Eigenschaften und sind darüber hinaus im Vergleich zu den aus dem Stand der Technik bekannten Anionenaustauschern einfach zu synthetisieren. Sie eignen sich hervorragend zur Entsalzung von Wasser in Kühlkreisläufen oder zum Einsatz als Katalysator bei chemischen Umsetzungen.

Die erfindungsgemäßen Anionenaustauscher können entweder durch Alkylierung von Amin-haltigen Perlpolymerisaten oder durch Polymerisation von alkylierten Amin-haltigen Monomeren gewonnen werden.

Die vorliegende Erfindung betrifft deshalb auch ein Verfahren zur Herstellung wärmestabiler Anionenaustauscher auf Basis wenigstens eines aromatischen Monomers und wenigstens eines Vernetzers mit Strukturelementen der allgemeinen Formel (I) 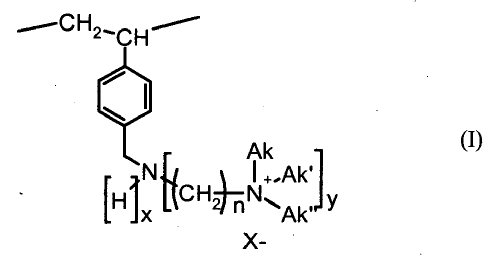 worin
- Ak, Ak', Ak": jeweils unabhängig voneinander, gleich oder verschieden für einen C₁-C₁₈-Alkylrest stehen,
- n: für eine gerade Zahl zwischen 5 und 18 steht,
x+y=2 und

X für Cl, Br, OH, HCO₃, HSO₄, ½ (SO₄), ½ CO₃, NO₃, F, H₂PO₄, ½ HPO₄, ⅓ PO₄ steht, dadurch gekennzeichnet, dass man entweder Amin-haltige Perlpolymerisate alkyliert oder alkylierte, Amin-haltige Monomere polymerisiert und die nach beiden Varianten erhaltenen Ionenaustauscher durch Umladen in die ionische Form überführt.

Zur Herstellung von Amin-haltigen Perlpolymerisaten werden bevorzugt Amin-haltige Monomere, besonders bevorzugt Vinylbenzylamine, alleine oder in Kombination mit weiteren, nicht funktionellen Monomeren in Perlform (co)polymerisiert.

Eine bevorzugte Methode zur Herstellung von Amin-haltigen Perlpolymerisaten besteht darin, zunächst nicht-funktionalisierte Perlpolymerisate durch Suspensionspolymerisation nicht funktionalisierter Monomere zu erzeugen und diese in einem oder mehreren nachgeschalteten Schritt(en) mit Aminfunktionen zu versehen.

Als nicht funktionalisierte Monomere werden im Allgemeinen monoethylenisch ungesättigte aromatische Monomere, bevorzugt Styrol, α-Methylstyrol, Vinyltoluol, t-Butylstyrol oder Vinylnaphthalin eingesetzt. Gut geeignet sind auch Mischungen dieser Monomere sowie Mischungen von monoethylenisch ungesättigten aromatischen Monomeren mit bis zu 20 Gew.-% anderer monoethylenisch ungesättigter Monomere, bevorzugt Chlorstyrol, Bromstyrol, Acrylnitril, Methacrylnitril, Ester der Acrylsäure und Methacrylsäure wie Methylmethacrylat, Ethylmethacrylat, Methylacrylat, Ethylacrylat, Isopropylmethacrylat, Butylacrylat, Butylmethacrylat, Hexylmethacrylat, 2-Ethylhexylacrylat, Ethylhexylmethacrylat, Decylmethacrylat, Dodecylmethacrylat, Stearylmethacrylat, oder iso-Bornylmethacrylat. Insbesondere bevorzugt sind Styrol und Vinyltoluol.

Den Monomeren werden Vernetzer beigemischt. Vernetzer sind im Allgemeinen multiethylenisch ungesättigte Verbindungen, bevorzugt Divinylbenzol, Divinyltoluol, Trivinylbenzol, Ethylenglykoldimethacrylat, Ethylenglykoldiacrylat, Ethylenglykoldivinylether, Diethylenglykoldivinylether, Butandioldivinylether, Octadien oder Triallylcyanurat. Besonders bevorzugt sind die vinylaromatischen Vernetzer Divinylben zol oder Trivinylbenzol. Ganz besonders bevorzugt ist Divinylbenzol. Die Vernetzer können alleine oder als Gemisch verschiedener Vernetzer eingesetzt werden. Die Gesamtmenge einzusetzender Vernetzer beträgt in der Regel 0,1 bis 80 Gew.-%, bevorzugt 0,5 bis 60 Gew.-%, besonders bevorzugt 1 bis 40 Gew.-%, bezogen auf die Summe der ethylenisch ungesättigten Verbindungen.

In einer bevorzugten Ausführungsform der vorliegenden Erfindung können den Monomeren auch Porenbildner, so genannte Porogene, zugesetzt werden. Die Porogene dienen der Bildung einer Porenstruktur im nicht funktionellen Perlpolymerisat. Als Porogene werden bevorzugt organische Verdünnungsmittel eingesetzt. Besonders bevorzugt werden solche organischen Verdünnungsmittel, die sich zu weniger als 10 Gew.-%, vorzugsweise weniger als 1 Gew.-% in Wasser lösen, eingesetzt. Insbesondere geeignete Porogene sind Toluol, Ethylbenzol, Xylol, Cyclohexan, Oktan, Isooktan, Decan, Dodekan, Isododekan, Methylisobutylketon, Ethylacetat, Butylacetat, Dibutylphtalat, n-Butanol, 4-Methyl-2-pentanol und n-Octanol. Ganz besonders bevorzugt sind Toluol, Cyclohexan, Isooktan, Isododekan, 4-Methyl-2-pentanol und Methylisobutylketon. Als Porogen können aber auch unvernetzte, lineare oder verzweigte Polymere eingesetzt werden, wie z.B. Polystyrol und Polymethylmethacrylat.

Das Porogen wird üblicherweise in Mengen von 10 bis 70 Gew.-%, bevorzugt 25 bis 65 Gew.-%, jeweils bezogen auf die Summe der ethylenisch ungesättigten Verbindungen, eingesetzt.

Bei der Herstellung der nicht funktionellen Perlpolymerisate werden die oben genannten Monomere in einer weiteren bevorzugten Ausführungsform der vorliegenden Erfindung in Anwesenheit eines Dispergierhilfsmittels unter Verwendung eines Initiators in wässriger Suspension polymerisiert.

Als Dispergierhilfsmittel werden bevorzugt natürliche und synthetische wasserlösliche Polymere eingesetzt. Besonders bevorzugt werden Gelatine, Stärke, Polyvinylalkohol, Polyvinylpyrrolidon, Polyacrylsäure, Polymethacrylsäure oder Copolymerisate aus (Meth)acrylsäure und (Meth)-acrylsäureestem eingesetzt. Ganz besonders bevorzugt werden Gelatine oder Cellulosederivate, insbesondere Celluloseester und Celluloseether, wie Carboxymethylcellulose, Methylcellulose, Hydroxyethylcellulose oder Methylhydroxyethylcellulose eingesetzt. Die Einsatzmenge der Dispergierhilfsmittel beträgt im Allgemeinen 0.05 bis 1 %, vorzugsweise 0.1 bis 0.5 %, bezogen auf die Wasserphase.

In einer weiteren bevorzugten Ausführungsform der vorliegenden Erfindung werden Initiatoren eingesetzt. Geeignete Initiatoren sind Verbindungen, die bei Temperaturerhöhung freie Radikale bilden. Bevorzugt werden Per oxyverbindungen, besonders bevorzugt Dibenzoylperoxid, Dilaurylperoxid, Bis-(p-chlorbenzoyl)peroxid, Dicyclohexylperoxydicarbonat und tert.-Amylperoxy-2-ethylhexan sowie Azoverbindungen, besonders bevorzugt 2,2' -Azobis(isobutyronitril) oder 2,2'-Azobis(2-methylisobutyronitril) oder auch aliphatische Peroxyester, bevorzugt tert.-Butylperoxyacetat, tert.-Butylperoxyisobutyrat, tert.-Butylperoxypivalat, tert.-Butylperoxyoctoat, tert.-Butylperoxy-2-ethylhexanoat, tert.-Butylperoxyneodecanoat, tert.-Amylperoxypivalat, tert.-Amylperoxyoctoat, tert.-Amylperoxy-2-ethylhexanoat, tert.-Amylperoxyneodecanoat, 2,5-Bis(2-ethylhexanoylperoxy)-2,5-dimethylhexan, 2,5-Dipivaloyl-2,5-dimethylhexan, 2,5-Bis(2-neo-decanoylperoxy)-2,5-dimethylhexan, Di-tert.-butylperoxyazelat und Di-tert.-amylperoxyazelat eingesetzt.

Die Initiatoren werden im Allgemeinen in Mengen von 0,05 bis 6,0 Gew.-%, vorzugsweise 0,1 bis 5,0 Gew.-%, besonders bevorzugt 0,2 bis 2 Gew.-%, bezogen auf die Summe der ethylenisch ungesättigten Verbindungen, angewendet.

Die Wasserphase kann ein Puffersystem enthalten, welches den pH-Wert der Wasserphase auf einen Wert zwischen 12 und 3, vorzugsweise zwischen 10 und 4 einstellt. Besonders gut geeignete Puffersysteme enthalten Phosphat-, Acetat-, Citrat- oder Boratsalze.

Es kann vorteilhaft sein, einen in der wässrigen Phase gelösten Inhibitor einzusetzen. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin, Kondensationsprodukte aus Phenolen mit Aldehyden. Weitere organische Inhibitoren sind stickstoffhaltige Verbindungen wie z.B. Diethylhydroxylamin und Isopropylhydroxylamin. Resorcin wird als Inhibitor bevorzugt. Die Konzentration des Inhibitors beträgt 5 - 1000, vorzugsweise 10 - 500, besonders bevorzugt 20 - 250 ppm, bezogen auf die wässrige Phase.

Die organische Phase kann als Tröpfchen durch Rühren bzw. durch Verdüsung (Jetting) in die wässrige Phase dispergiert werden. Unter organischer Phase wird die Mischung aus Monomer(en) und Vernetzter(n) sowie gegebenenfalls zusätzlich Porogen(en) und / oder Initiator(en) verstanden. Bei der klassischen Dispersionspolymerisation werden die organischen Tröpfchen durch Verrühren erzeugt. Im 4 Liter Maßstab werden typischerweise Rührerdrehzahlen von 250 bis 400 UpM verwendet. Werden die Tröpfchen durch Verdüsung erzeugt, empfiehlt es sich, zur Erhaltung des einheitlichen Tröpfchendurchmessers die organischen Tröpfchen zu verkapseln. Verfahren zur Mikroverkapselung von verdüsten organischen Tröpfchen werden beispielsweise in EP-A 0 046 535 beschrieben.

Die mittlere Teilchengröße der gegebenenfalls verkapselten Monomertröpfchen beträgt 10-1000 µm, vorzugsweise 100 - 1000 µm.

Das Verhältnis der organischen Phase zur wässrigen Phase beträgt in der Regel 1:20 bis 1:0,6, bevorzugt 1:10 bis 1:1, besonders bevorzugt 1:5 bis 1:1,2.

Die organische Phase kann aber auch im so genannten Seed-Feed-Verfahren zu einer Suspension von Saatpolymerisaten, die die organische Phase aufnehmen, zugegeben werden, gemäß EP-A 0 617 714 deren Lehre von der vorliegenden Anmeldung mit umfasst wird. Die mittlere Teilchengröße der mit der organischen Phase gequollenen Saatpolymerisate beträgt 5-1200 µm, vorzugsweise 20 - 1000 µm. Das Verhältnis der Summe organische Phase + Saatpolymerisat zur wässrigen Phase beträgt in der Regel 1:20 bis 1:0,6, bevorzugt 1:10 bis 1:1, besonders bevorzugt 1:5 bis 1:1,2.

Die Polymerisation der Monomere wird bei erhöhter Temperatur durchgeführt. Die Polymerisationstemperatur richtet sich nach der Zerfallstemperatur des Initiators und liegt typischerweise im Bereich von 50 bis 150°C, vorzugsweise 60 bis 120°C. Die Polymerisationsdauer liegt bei 30 Minuten bis 24 Stunden, bevorzugt 2 bis 15 Stunden.

Am Ende der Polymerisation werden die nicht funktionellen Perlpolymerisate von der wässrigen Phase abgetrennt, beispielsweise auf einer Nutsche, und gegebenenfalls getrocknet.

Durch Jetting oder durch Seed-Feed-Verfahren werden die erfindungsgemäß bevorzugten monodispersen wärmestabilen Anionenaustauscher erhalten. Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ±10% des häufigsten Durchmessers um den häufigsten Durchmesser herum liegt.

Zum Beispiel bei einem Stoff mit häufigstem Durchmesser von 0,5 mm liegen mindestens 90 Volumen- oder Massen-% in einem Größenintervall zwischen 0,45 mm und 0,55 mm, bei einem Stoff mit häufigsten Durchmesser von 0,7 mm liegen mindestens 90 Volumen- oder Massen-% in einem Größenintervall zwischen 0,77 mm und 0,63 mm.

Die Funktionalisierung zu Amin-haltigen Perlpolymerisaten kann durch verschiedene Verfahren erfolgen. So können die Perlpolymerisate durch Chlormethylierung und anschließender Umsetzung mit beispielsweise Hexamethylentetramin gemäß DD 79152 und IL 52121 zu Amin-haltigen Peripolymerisaten umgesetzt werden.

Ein bevorzugtes Verfahren zur Umsetzung nicht funktioneller polyvinylaromatischer Peripolymerisate zu Amin-haltigen Peripolymerisaten ist das so genannte Phthalimidverfahren gemäß US 4952608, DAS 2519244 und EP-A 1 078 690. Dabei werden die nicht funktionalisierten polyvinylaromatischen Peripolymerisate mit Phthalimidderivaten kondensiert. Als Katalysator wird Oleum, Schwefelsäure oder Schwefeltrioxid eingesetzt.

Die Abspaltung des Phthalsäurerestes und damit die Freilegung der Aminomethylgruppe erfolgt durch Behandeln des phthalimidomethylierten, vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende ammomethylierte Perlpolymerisat wird schließlich mit vollentsalztern Wasser alkalifrei gewaschen.

Die Alkylierung der Amin-haltigen Monomere und/oder Polymerisate erfolgt beispielsweise durch Umsetzung mit ω-funktioneilen Alkylammoniumsalzen der allgemeinen Formel (II) 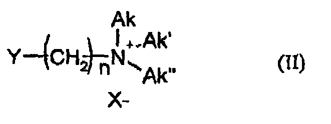 worin
- n: für eine ganze Zahl zwischen 5 und 18 steht,
- Y: für Br, Cl, I oder (SO₄)_{1/2} steht,
- X⁻: für ein geeignetes Gegenion wie z.B. Cl⁻, Br⁻, I⁻, (SO₄²⁻)_{1/2}, NO₃⁻, HCO₃⁻ steht und
- Ak, Ak', Ak": jeweils unabhängig voneinander, gleich oder verschieden für eine lineare oder verzweigte Alkylgruppe mit 1 bis 18 Kohlenstoffatomen, mit oder ohne funktionellen Gruppen, stehen.

Bevorzugt stehen n für eine ganze Zahl von 5 bis 11, Y für Br und/oder Cl, X⁻ für Br⁻ und/oder Cl⁻ und Ak, Ak', Ak" jeweils unabhängig voneinander für Methyl, Ethyl, 2-Hydroxyethyl, n-Propyl, 2-Hydroxypropyl oder n-Butyl. Insbesondere bevorzugt erfolgt die Alkylierung durch 5-Brompentyltrimethylammoniumbromid, 6-Bromhexyltrimethylammoniumbromid, 5-Chlorpentyltrimethylammoniumchlorid oder 6-Chlorhexyltrimethylammoniumchlorid.

Die ω-funktionellen Alkylammoniumsalze können alleine oder auch als Gemisch verschiedener ω-funktionellen Alkylammoniumsalzen eingesetzt werden.

Die Umsetzung des aminofunktionellen Perlpolymerisats mit den ω-funktionellen Alkylammoniumsalzen erfolgt in einem Lösungsmittel, das sowohl das aminofunktionelle Perlpolymerisat aufquillt, als auch die ω-funktionellen Alkylammoniumsalze löst. Solche Lösungsmittel sind beispielsweise Wasser, Methanol, Ethanol, Isopropanol, Dimethylsulfoxid, Dimethylformamid und Acetonitril. Bevorzugt sind Wasser und Methanol, besonders bevorzugt ist Wasser.

Die Umsetzung des aminofunktionellen Perlpolymerisats mit den ω-funktionellen Alkylammoniumsalzen erfolgt in der Regel bei Temperaturen zwischen 20 °C bis 100 °C, bevorzugt zwischen 30 °C und 80 °C, besonders bevorzugt zwischen 30 °C und 70 °C. Die Reaktionsdauer beträgt in der Regel 0,5 bis 48 h, bevorzugt 1 bis 36 h, besonders bevorzugt 1 bis 24 h. Es ist vorteilhaft, die Umsetzung bei einem konstanten pH-Wert zwischen pH = 7 und pH = 11, bevorzugt zwischen pH = 8 und pH =10 durchzuführen.

Das Molverhältnis von ω-funktionellen Alkylammoniumsalzen zu Aminogruppen im aminofunktionellen Perlpolymerisat beträgt im Allgemeinen 0,1 bis 5, bevorzugt 0,5 bis 4, besonders bevorzugt 1 bis 3.

Nach dem Ende der Umsetzung werden die Harze im Allgemeinen isoliert und mit Lösungsmittel, bevorzugt mit Wasser, gewaschen, um die nicht reagierten ω-funktionellen Alkylammoniumsalze auszuwaschen.

Die Harze können durch Umladung mit verschiedenen Laugen, Säuren und Salzen in die gewünschte ionische Form gebracht werden. So wird durch Behandlung mit Schwefelsäure die sogenannte Sulfatform generiert, wo der Anionenaustauscher vorwiegend Sulfationen als Gegenionen trägt; durch Behandlung mit Natronlauge die Hydroxid-Form, wo der Anionenaustauscher vorwiegend Hydroxid-Ionen als Gegenionen trägt; durch Behandlung mit Kochsalzlösung die Chloridform, wo der Anionenaustauscher vorwiegend Chloridionen als Gegenionen trägt, usw. Für die Synthese thermostabiler Anionenaustauscher ist die Umladung in die OH-Form bevorzugt.

In Anwendungen für die Vollentsalzung und insbesondere in so genannten Mischbetten (Polisher) werden Harze benötigt, die zu mindestens 95 % Hydroxidionen als Gegenionen tragen.

Solche Harze können durch eine besondere sequentielle Umladung mit verschiedenen Lösungen erzeugt werden. So hat sich beispielsweise die Behandlung mit 1 bis 10 Bettvolumina verdünnter Schwefelsäure (1 bis 15 Gew.-%) gefolgt von 1 bis 20 Bettvolumina Natronlauge (2 bis 15 Gew.-%) als besonders effizient gezeigt. Bevorzugt werden 5 Bettvolumina 10 gew.-%iger Schwefelsäure gefolgt von 4 Bettvolumina 10 gew.-%iger Natronlauge. Als Bettvolumen wird das Volumen verstanden, dass die Harzschüttung in Wasser nach Einrütteln bis zur Volumenkonstanz einnimmt.

Die erfindungsgemäß erhaltenen starkbasischen Anionenaustauscher zeichnen sich durch hohe Austauscherkapazität, gute osmotische und mechanische Stabilität und durch hervorragende thermische Stabilität aus, weshalb sie hervorragend zur Entsalzung von Wasser in Kühlkreisläufen oder zum Einsatz als Katalysator bei chemischen Umsetzungen geeignet sind und eingesetzt werden können. Die erfindungsgemäß erhaltenen starkbasischen Anionenaustauscher eignen sich ganz besonders in der Aufbereitung radioaktiv kontaminierter Kühlkreisläufe von Primär- und /oder Sekundärkreislaufsystemen in Kernkraftwerken. Darüber hinaus kann der Einsatz in Abklingbecken von Kernkraftwerken aufgrund der Thermostabilität zu verlängerten Arbeitszyklen führen.

Die erfindungsgemäß erhaltenen starkbasischen Anionenaustauscher sind insbesondere in der Lage, in der Hydroxid-Form (mind. 90 % Hydroxid-Gegenionen) nach 3600 h bei 80 °C in entionisiertem Wasser 80 % ihrer ursprünglichen starkbasischen Austauscherkapazität zu erhalten sowie nach 3600 h bei 100 °C in entionisiertem Wasser 50 % ihrer ursprünglichen starkbasischen Austauscherkapazität zu erhalten.

In einem Schnelltest sind sie in der Lage, in der Hydroxidform nach 60 h bei 100 °C in 0,1 mol/l Natronlauge 95 % ihrer ursprünglichen starkbasischen Austauscherkapazität zu erhalten.

Die Erfindung wird im Folgenden durch Beispiele erläutert. Diese Beispiele stellen in keinster Weise eine Einschränkung der hier beschriebenen Erfindung dar.

### Beispiele

### Beispiel 1: Herstellung eines heterodispersen aminhaltigen Perlpolymerisats.

### 1a) Herstellung eines heterodispersen Perlpolymerisates

In einem Polymerisationsreaktor werden bei Raumtemperatur 1112 ml VE Wasser (= vollentsalztes Wasser), 150 ml einer 2 gew.-%igen wässrigen Lösung von Methylhydroxyethylcellulose sowie 7,5 Gramm Dinatriumhydrogenphosphat x 12 H₂O vorgelegt. Die gesamte Lösung wird eine Stunde bei Raumtemperatur gerührt. Anschließend gibt man eine Monomermischung bestehend aus 95,37 g Divinylbenzol 80,53 gew.-%ig , 864,63 g Styrol , 576 g Isododekan und 7,70 g Dibenzoylperoxid 75 gew.-%ig zu. Der Ansatz bleibt zunächst 20 Minuten bei Raumtemperatur stehen und wird dann 30 Minuten bei Raumtemperatur bei einer Rührgeschwindigkeit von 200 UpM gerührt. Der Ansatz wird auf 70 °C erhitzt, weitere 7 Stunden bei 70 °C gerührt, dann auf 95 °C erhitzt und weitere 2 Stunden bei 95 °C gerührt. Nach dem Abkühlen wird das erhaltene Perlpolymerisat abfiltriert und mit Wasser gewaschen und bei 80 °C 48 Stunden getrocknet.

### 1b) Herstellung eines heterodispersen, amidomethylierten Perlpolymerisates

Bei Raumtemperatur werden 2000 g 1,2 Dichlorethan, 608 g Phthalimid und 423 g 30,0 gew.-%iges Formalin vorgelegt. Der pH-Wert der Suspension wird mit Natronlauge auf 5,5 bis 6 eingestellt. Anschließend wird das Wasser destillativ entfernt. Dann werden 44,6 g Schwefelsäure zudosiert. Das entstehende Wasser wird destillativ entfernt. Der Ansatz wird abgekühlt. Bei 30°C wird 163 g 65 gew.%-iges Oleum zudosiert, anschließend 320 g heterodisperses Perlpolymerisat aus Beispiel 1a). Die Suspension wird auf 70°C erhitzt und weitere 6 Stunden bei dieser Temperatur gerührt. Die Reaktionsbrühe wird abgezogen, VE Wasser wird zudosiert und Restmengen an Dichlorethan werden destillativ entfernt.

### Ausbeute an amidomethyliertem Perlpolymerisat : 1710 ml

Elementaranalytische Zusammensetzung: Kohlenstoff : 75,1 Gew. -%; Wasserstoff: 4,9 Gew. -%; Stickstoff: 5,9 Gew.-%

### 1c) Herstellung eines heterodispersen, aminomethylierten Perlpolymerisates

Zu 1000 ml amidomethyliertem Perlpolymerisat aus Beispiel 1b) werden 920 ml 20 gew.-%ige Natronlauge bei Raumtemperatur hinzudosiert. Die Suspension wird auf 180°C erhitzt und 8 Stunden bei dieser Temperatur gerührt.

Das erhaltene Perlpolymerisat wird mit VE Wasser gewaschen.

Ausbeute an aminomethyliertem Perlpolymerisat : 840 ml

Elementaranalytische Zusammensetzung: Stickstoff: 11,5 Gew.-%

Gehalt des Harzes an Aminomethylgruppen : 2,49 mol/l

### Beispiel 2: Herstellung eines monodispersen aminhaltigen Perlpolymerisats.

### 2a) Herstellung eines monodispersen, makroporösen Perlpolymerisates auf der Basis von Styrol, Divinylbenzol und Ethylstyrol

In einem 10 1 Glasreaktor werden 3000 g VE Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25 °C temperiert. Unter Rühren wird anschließend eine Mischung aus 3200 g durch Verdüsung (Jetting) gewonnenen, mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertröpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 2b) Herstellung eines monodispersen, amidomethylierten Perlpolymerisates

Bei Raumtemperatur werden 2373 g Dichlorethan, 705 g Phthalimid und 505 g 29,2 gew.-%iges Formalin vorgelegt. Der pH Wert der Suspension wird mit Natronlauge auf 5,5 bis 6 eingestellt. Anschließend wird das Wasser destillativ entfernt. Dann werden 51,7 g Schwefelsäure zudosiert. Das entstehende Wasser wird destillativ entfernt. Der Ansatz wird abgekühlt. Bei 30°C werden 189 g 65 %iges Oleum und anschließend 371,4 g monodisperses Perlpolymerisat aus Beispiel 2a) eindosiert. Die Suspension wird auf 70°C erhitzt und weitere 6 Stunden bei dieser Temperatur gerührt. Die Reaktionsbrühe wird abgezogen, VE Wasser wird hinzudosiert und Restmengen an Dichlorethan werden destillativ entfernt.

### Ausbeute an amidomethyliertem Perlpolymerisat : 2140 ml

| Elementaranalytische Zusammensetzung: | |
|---|---|
| Kohlenstoff: | 75,3 Gew. %; |
| Wasserstoff: | 4,9 Gew. %; |
| Stickstoff: | 5,8 Gew. %; |
| Rest: | Sauerstoff. |

### 2c) Herstellung eines monodispersen, aminomethylierten Perlpolymerisates

Zu 2100 ml amidomethyliertem Perlpolymerisat aus 2b) werden 1019 g 45 gew.-%ige Natronlauge und 406 ml VE Wasser bei Raumtemperatur zudosiert. Die Suspension wird auf 180°C erhitzt und 6 Stunden bei dieser Temperatur gerührt.

Das erhaltene Perlpolymerisat wird mit VE Wasser gewaschen.

Ausbeute an aminomethyliertem Perlpolymerisat: 1770 ml

Als Gesamtausbeute - hochgerechnet - ergeben sich 1804 ml

Elementaranalytische Zusammensetzung: Stickstoff: 10,90 Gew. %

Menge an Aminomethylgruppen in mol pro Liter aminomethyliertem Perlpolymerisat: 2,29.

Aus der elementaranalytischen Zusammensetzung des aminomethylierten Perlpolymerisates lässt sich errechnen, dass im statistischen Mittel pro aromatischem Kern - her rührend aus den Styrol und Divinylbenzoleinheiten - 1,06 Wasserstoffatome durch Aminomethylgruppen substituiert sind.

### Beispiel 3: Herstellung eines thermostabilen Anionenaustauschers mit 6-Bromhexyltrimethylammoniumbromid (erfindungsgemäß)

250 ml des Harzes aus Beispiel 1c) werden in 750 ml Wasser vorgelegt. Bei Raumtemperatur wird eine Lösung von 565 g 6-Bromhexyltrimethylammoniumbromid in 500 ml Wasser zugegeben.

Die Suspension wird auf 50 °C aufgeheizt und 24 h bei dieser Temperatur gehalten, wobei der pH-Wert durch Zugabe von 10 gew.-%iger Natronlauge auf pH=9 gehalten wird.

Nach 24 h sind 320 ml 10 gew.-%ige Natronlauge verbraucht.

Das Harz wird mit VE Wasser solange gewaschen, bis der Ablauf Bromid-frei ist (Der Nachweis der Bromidionen erfolgt durch Fällung mit Silbernitrat).

Man erhält 600 ml eines Anionenaustauschers in der Bromid-Form mit 5,7 Gew.-% Stickstoffgehalt.

Zur Überführung in die Hydroxid-Form wird das Harz in einer Säule wie folgt behandelt:

Innerhalb 2 h werden 2150 ml 5,3 gew.-%ige Natronlauge bei 70 °C über das Harz geleitet.

Das Harz wird dann mit 70 °C warmem, entionisiertem Wasser neutral gewaschen.

Innerhalb von 2 h werden 4300 ml 7 gew.-%ige Schwefelsäure über das Harz geleitet. Anschließend wird das Harz neutral gewaschen. Es folgen eine Behandlung mit 4200 ml 5 gew.-%ige Natriumhydrogencarbonatlösung in 2 h und eine Neutralwäsche. Anschließend wird das Harz mit 2150 ml 5,3 gew.-%iger Natronlauge innerhalb von 4 h eluiert und mit VE Wasser gewaschen, bis der Ablauf eine Leitfähigkeit < 4 µS/cm aufweist.

Ausbeute an Harz in der Hydroxid-Form: 630 ml.

Menge an schwachbasischen Gruppen in mol pro Liter Harz in der Hydroxid-Form: 0,85.

Menge an starkbasischen Gruppen in mol pro Liter Harz in der Hydroxid-Form: 0,91.

### Beispiel 4: Herstellung eines thermostabilen Anionenaustauschers mit 6-Bromhexyltrimethylammoniumbromid (erfindungsgemäß)

250 ml des Harzes aus Beispiel 2c) werden in 750 ml Wasser vorgelegt. Bei Raumtemperatur wird eine Lösung von 520 g 6-Bromhexyltrimethylammoniumbromid in 500 ml Wasser zugegeben.

Die Suspension wird auf 50 °C aufgeheizt und 24 h bei dieser Temperatur gehalten, wobei der pH-Wert durch Zugabe von 10 gew.-%iger Natronlauge auf pH=9 gehalten wird.

Nach 24h sind 500 ml 10 gew.-%ige Natronlauge verbraucht.

Das Harz wird mit VE Wasser solange gewaschen, bis der Ablauf Bromid-frei ist (Der Nachweis der Bromidionen erfolgt durch Fällung mit Silbernitrat).

Man erhält 575 ml eines Anionenaustauschers in der Bromidform mit 7,3 Gew.-% Stickstoffgehalt.

Zur Überführung in die Hydroxid-Form wird das Harz in einer Säule wie folgt behandelt:

Innerhalb 2 h werden 2050 ml 5,3 gew.-%ige Natronlauge bei 70 °C über das Harz geleitet.

Das Harz wird dann mit 70 °C warmem, entionisiertem Wasser neutral gewaschen.

Innerhalb 2 h werden 4150 ml 7 gew.-%ige Schwefelsäure über das Harz geleitet. Anschließend wird das Harz neutral gewaschen. Es folgen eine Behandlung mit 4000 ml 5 gew.-%ige Natriumhydrogencarbonatlösung in 2 h und eine Neutralwäsche. Anschließend wird das Harz mit 2050 ml 5,3 gew.-%iger Natronlauge innerhalb 4 h eluiert und mit VE Wasser gewaschen, bis der Ablauf eine Leitfähigkeit < 4 µS/cm aufweist.

Ausbeute an Harz in der Hydroxid-Form: 590 ml.

Menge an schwachbasischen Gruppen in mol pro Liter Harz in der Hydroxid-Form: 0,73.

Menge an starkbasischen Gruppen in mol pro Liter Harz in der Hydroxid-Form: 0,82.

### Beispiel 5: Herstellung eines thermostabilen Anionenaustauschers mit 5-Brompentyltrimethylammoniumbromid (erfindungsgemäß).

250 ml eines Harzes mit 2,3 mol Aminomethylgruppen pro Liter, hergestellt analog zu Beispiel 2a-c) werden in 750 ml Wasser vorgelegt. Bei Raumtemperatur wird eine Lösung von 350 g 5-Brompenttrimethylammoniumbromid in 500 ml Wasser zugegeben.

Die Suspension wird auf 50 °C aufgeheizt und 24 h bei dieser Temperatur gehalten, wobei der pH-Wert durch Zugabe von 10 gew.-%iger Natronlauge auf pH=9 gehalten wird.

Nach 24h sind 350 ml 10 gew.-%ige Natronlauge verbraucht.

Das Harz wird mit entionisiertem Wasser solange gewaschen, bis der Ablauf Bromid-frei ist (Der Nachweis der Bromidionen erfolgt durch Fällung mit Silbernitrat).

Man erhält 600 ml eines Anionenaustauschers in der Bromidform mit 7,7 Gew.-% Stickstoffgehalt.

Zur Überführung in die Hydroxid-Form wird das Harz in einer Säule wie folgt behandelt:

Innerhalb 2 h werden 2150 ml 5,3 gew.-%ige Natronlauge bei 70 °C über das Harz geleitet.

Das Harz wird dann mit 70 °C warmem, entionisiertem Wasser neutral gewaschen.

Innerhalb 2 h werden 4300 ml 7 gew.-%ige Schwefelsäure über das Harz geleitet. Anschließend wird das Harz neutral gewaschen. Es folgen eine Behandlung mit 4200 ml 5 gew.-%ige Natriumhydrogencarbonatlösung in 2 h und eine Neutralwäsche. Anschließend wird das Harz mit 2150 ml 5,3 gew.-%iger Natronlauge innerhalb 4 h eluiert und mit entionisiertem Wasser gewaschen, bis der Ablauf eine Leitfähigkeit < 4 µS/cm aufweist.

Ausbeute an Harz in der Hydroxid-Form: 690 ml.

Menge an schwachbasischen Gruppen in mol pro Liter Harz in der Hydroxid-Form: 0,81.

Menge an starkbasischen Gruppen in mol pro Liter Harz in der Hydroxid-Form: 0,85.

### Beispiel 6: Herstellung eines Anionenaustauschers mit 4-Brombutyltrimethylammoniumbromid (nicht erfindungsgemäß).

250 ml eines Harzes mit 2,3 mol Aminomethylgruppen pro Liter, hergestellt analog zu Beispiel 2a-c werden in 750 ml Wasser vorgelegt. Bei Raumtemperatur wird eine Lösung von 160 g 4-Brombutyltrimethylammoniumbromid in 500 ml Wasser zugegeben.

Das Harz wird mit VE Wasser solange gewaschen, bis der Ablauf Bromidfrei ist (Der Nachweis der Bromidionen erfolgt durch Fällung mit Silbernitrat).

Man erhält 480 ml eines Anionenaustauschers in der Bromidform mit 7,6 Gew.-% Stickstoffgehalt.

Zur Überführung in die Hydroxid-Form wird das Harz in einer Säule innerhalb 2 h mit 1200 ml 4 gew.-%ige Natronlauge behandelt.

Anschließend wird das Harz mit entionisiertem Wasser gewaschen, bis der Ablauf neutral ist.

Menge an schwachbasischen Gruppen in mol pro Liter Harz in der Hydroxid-Form: 1,01.

Menge an starkbasischen Gruppen in mol pro Liter Harz in der Hydroxid-Form: 0,55.

### Beispiel 7: Herstellung eines Anionenaustauschers mit Glycidyltrimethylammoniumchlorid (nicht erfindungsgemäß).

250 ml eines Harzes mit 2,3 mol Aminomethylgruppen pro Liter, hergestellt analog zu Beispiel 2a-c) werde n in einer Säule mit 1500 ml Methanol eluiert und anschließend in 2200 ml Methanol vorgelegt. Bei Raumtemperatur werden 131 g Glycidyltrimethylammoniumchlorid zugegeben. Die Suspension wird 12 h auf Rückfluss gehalten.

Nach Abstellen der Reaktion wird das Harz in einer Säule zunächst mit 1500 ml Methanol, dann mit VE Wasser solange gewaschen, bis der Ablauf Chloridfrei ist (Der Nachweis der Chloridionen erfolgt durch Fällung mit Silbernitrat).

Man erhält 520 ml eines Anionenaustauschers in der Chloridform mit 9,9 Gew.-% Stickstoffgehalt.

Zur Überführung in die Hydroxidform wird das Harz in einer Säule wie folgt behandelt:

Innerhalb 2 h werden 1850 ml 5,3 gew.-%ige Natronlauge bei 70 °C über das Harz geleitet.

Das Harz wird dann mit 70 °C warmem, entionisiertem Wasser neutral gewaschen.

Innerhalb 2 h werden 3700 ml 7 gew.-%ige Schwefelsäure über das Harz geleitet. Anschließend wird das Harz neutral gewaschen. Es folgen eine Behandlung mit 3650 ml 5 gew.-%ige Natriumhydrogencarbonatlösung in 2 h und eine Neutralwäsche. Anschließend wird das Harz mit 1850 ml 5,3 gew.-%iger Natronlauge innerhalb 4 h eluiert und mit VE Wasser gewaschen, bis der Ablauf eine Leitfähigkeit < 4 µS/cm aufweist.

Ausbeute an Harz in der Hydroxid-Form: 560 ml.

Menge an schwachbasischen Gruppen in mol pro Liter Harz in der Hydroxid-Form: 0,98.

Menge an starkbasischen Gruppen in mol pro Liter Harz in der Hydroxid-Form: 0,56.

### Beispiel 8: Herstellung eines Anionenaustauschers mit 6-Bromhexyltrimethylammoniumbromid (nicht erfindungsgemäß).

### Stufe 1)

1000 ml des Harzes aus Beispiel 2c und 497 g 30 gew.-%iger Formaldehydlösung werden in 1000 ml VE Wasser vorgelegt. Die Suspension wird auf 40 °C aufgeheizt und der pH-Wert wird mittels 85 gew.-%iger Ameisensäure auf pH = 3 eingestellt. Anschließend wird folgendes Temperaturprogramm angewendet: 30 Minuten bei 55 °C halten, 30 Minuten bei 70 °C halten, 30 Minuten bei 85 °C halten und schließlich auf Rückfluss bringen. Dabei wird der pH-Wert durch Zugabe von 85 gew.-%ige Ameisensäure weiterhin auf pH = 3 gehalten. 30 Minuten nach Erreichen der Rückflusstemperatur wird der pH-Wert auf pH = 2 eingestellt. Zur pH-Wert-Einstellung wird solange 85 gew.-%ige Ameisensäure verwendet, bis 269 g 85 gew.-%ige Ameisensäure verbraucht sind. Anschließend wird die pH-Wert-Einstellung mit 50 gew.-%iger Schwefelsäure vorgenommen. Nach 30 Minuten Rückfluss bei pH = 2 wird der pH-Wert auf pH = 1 eingestellt. Der Rückfluss bei pH = 1 wird weitere 10 Stunden aufrechterhalten.

Nach Abkühlen der Suspension wird das Harz mit VE Wasser gewaschen und anschließend in einer Säule zunächst mit 3000 ml 4 gew.-%iger Natronlauge, danach mit VE Wasser eluiert, bis der Ablauf neutral ist.

Man erhält 1150 ml eines Dimethylaminomethylgruppen enthaltenden Harzes.

Menge an Dimethylaminomethylgruppen in mol pro Liter Perlpolymerisat: 1,78

### Stufe 2)

250 ml des Harzes aus Stufe 1 werden in 750 ml Wasser vorgelegt. Bei Raumtemperatur wird eine Lösung von 202 g 6-Bromhexyltrimethylammoniumbromid in 500 ml Wasser zugegeben.

Die Suspension wird auf 50 °C aufgeheizt und 24 h bei dieser Temperatur gehalten, wobei der pH-Wert durch Zugabe von 10 gew.-%iger Natronlauge auf pH=9 gehalten wird.

Nach 24h sind 200 ml 10 gew.-%ige Natronlauge verbraucht.

Das Harz wird mit VE Wasser solange gewaschen, bis der Ablauf Bromid-frei ist (Der Nachweis der Bromidionen erfolgt durch Fällung mit Silbernitrat).

Man erhält 420 ml eines Anionenaustauschers in der Bromid-Form mit 7,2 Gew.-% Stickstoffgehalt.

Zur Überführung in die Hydroxid-Form wird das Harz in einer Säule wie folgt behandelt:

Innerhalb 2 h werden 1500 ml 5,3 gew.-%ige Natronlauge bei 70 °C über das Harz geleitet.

Das Harz wird dann mit 70 °C warmem, VE Wasser neutral gewaschen.

Innerhalb von 2 h werden 3000 ml 7 gew.-%ige Schwefelsäure über das Harz geleitet. Anschließend wird das Harz neutral gewaschen. Es folgen eine Behandlung mit 2900 ml 5 gew.-%ige Natriumhydrogencarbonatlösung in 2 h und eine Neutralwäsche. Anschließend wird das Harz mit 1500 ml 5,3 gew.-%iger Natronlauge innerhalb 4 h eluiert und mit entionisiertem Wasser gewaschen, bis der Ablauf eine Leitfähigkeit < 4 µS/cm aufweist.

Ausbeute an Harz in der Hydroxid-Form: 480 ml.

Menge an schwachbasischen Gruppen in mol pro Liter Harz in der Hydroxid-Form: 0,56.

Menge an starkbasischen Gruppen in mol pro Liter Harz in der Hydroxid-Form: 0,73.

### Beispiel 9: Konventioneller Anionenaustauscher (nicht erfindungsgemäß).

Als Vergleichbeispiel wird Lewatit^{®} Monoplus MP500, ein konventioneller Anionenaustauscher mit Benzyltrimethylammoniumgruppen genommen.

Menge an schwachbasischen Gruppen in mol pro Liter Harz in der Hydroxid-Form: 0,02.

Menge an starkbasischen Gruppen in mol pro Liter Harz in der Hydroxid-Form: 0,91.

### Beispiel 10: Ausprüfung der Thermostabilität (Schnelltest).

Zur Schätzung des Verhaltens eines Harzes nach 3600 h bei 80 °C in VE Wasser wird die Thermostabilität des Anionenaustauscherharzes in folgendem Schnelltest geprüft:

Es werden jeweils 100 ml Harz in 400 ml 0,1 mol/l Natronlauge vorgelegt und 60 h bei 100 °C gerührt. Nach Abkühlen des Harzes wird das Volumen bestimmt und die Menge an schwach- und starkbasischen Gruppen pro Liter Harz bestimmt.

Das Produkt (Harzvolumen) x (Menge an starkbasischen Gruppen pro Liter Harz) ergibt die in dem getesteten Muster vorhandene Menge an starkbasischen Gruppen.

Durch Vergleich der Menge an starkbasischen Gruppen vor und nach Thermobehandlung wird der prozentuale Abbau an starkbasischen Gruppen während der thermischen Behandlung berechnet.

Die Ergebnisse sind in Tabelle 1 zusammengefasst:

**Tabelle 1: Thermoprüfung der Harze aus Beispielen 4 bis 9.**

| | Vor Thermoprüfung | | | | Nach Thermoprüfung | | | | | |
|---|---|---|---|---|---|---|---|---|---|---|
| | Starkb. (Eq/1) | Schwachb. (Eq/1) | Basenmenge (mmol) starkb. schwachb. | | Starkb. (Eq/1) | Schwachb. (Eq/1) | Vol. (ml) | Basenmenge (mmol) starkb. schwachb. | | Abbau starkb.(%) |
| Beispiel 4 | 0,82 | 0,73 | **82** | 73 | 0,79 | 0,67 | 102 | **81** | 68 | **1** |
| Beispiel 5 | 0,85 | 0,81 | **85** | 81 | 0,85 | 0,74 | 100 | **85** | 74 | **0** |
| Beispiel 6 | 0,55 | 1,01 | **55** | 101 | 0,15 | 0,16 | 80 | **12** | 13 | **78** |
| Beispiel 7 | 0,56 | 0,98 | **56** | 98 | 0,48 | 1,00 | 84 | **40** | 84 | **29** |
| Beispiel 8 | 0,73 | 0,56 | **73** | 56 | 0,56 | 0,75 | 82 | **46** | 62 | **37** |
| Beispiel 9 | 0,91 | 0,02 | **91** | 2 | 0,67 | 0,21 | 95 | **64** | 20 | **30** |

Man erkennt, dass die erfindungsgemäße Harze (Beispiele 4 und 5) keinen signifikanten Abbau der starkbasischen Gruppen während der thermischen Behandlung zeigen. Dagegen zersetzen sich im kommerziell erhältlichen Harz etwa ein drittel der starkbasischen Gruppen (Beispiel 9).

Harze, die weniger als 5 Kohlenstoffatome zwischen benzylischer Aminogruppe und quaternäre Ammoniumgruppe aufweisen, zeigen ebenfalls einen deutlichen Abbau der starkbasischen Gruppen (Beispiel 6, vier Kohlenstoffatome, und Beispiel 7, drei Kohlenstoffatome).

Beispiel 8 zeigt eindeutig, dass thermostabile Anionenaustauscher nur dann erhalten werden, wenn die benzylische Aminogruppe nicht quaterniert ist.

Struktur des Harzes aus Beispiel 8:

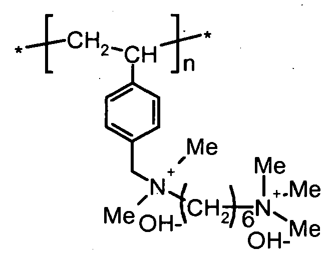

### Beispiel 11 Ausprüfung der Thermostabilität (Langzeittest)

Es wurden jeweils 100 ml der Harze aus Beispiel 4 und Beispiel 9 in 150 ml VE-Wasser vorgelegt und 3600 h bei 80 °C getempert. Nach Ablauf des Tests wurden Harzvolumen und Mengen an schwach- und starkbasischen Gruppen pro Liter Harz bestimmt.

Man erhielt folgende Ergebnisse:

**Tabelle 2: Thermoprüfung der Harze aus den Beispielen 4 bis 9 (Langzeittest).**

| | Vor Thermoprüfung | | | | Nach Thermoprüfung | | | | | | |
|---|---|---|---|---|---|---|---|---|---|---|---|
| Beispiel | Starkb. (Eq/1) | Schwachb. (Eq/1) | Basenmenge (mmol) starkb. schwachb. | | Starkb. (Eq/l) | Schwachb. (Eq/l) | Vol. (ml) | Basenmenge (mmol) starkb. schwachb. | | Abbau starkb. (%) | Erhalt starkb. (%) |
| 4 | 0,82 | 0,73 | **82** | 73 | 0,75 | 0,64 | 91 | **68** | 58 | **17** | **83** |
| 9 | 0,91 | 0,02 | **91** | 2 | 0,55 | 0,09 | 92 | **51** | 8 | **44** | **56** |

Man erkennt, dass nach 3600 h bei 80 °C in der OH-Form im erfindungsgemäßen Harz (Beispiel 4) mehr als 80 % der starkbasischen Gruppen erhalten bleiben. Im kommerziellen, nicht erfindungsgemäßen Harz (Beispiel 9) dagegen sind nach dem Text weniger als 60 % der starkbasischen Gruppen erhalten.

## Patentansprüche

1. Wärmestabile Anionenaustauscher auf Basis wenigstens eines aromatischen Monomers und wenigstens eines Vernetzers enthaltend die Strukturelemente der allgemeinen Formel (I) 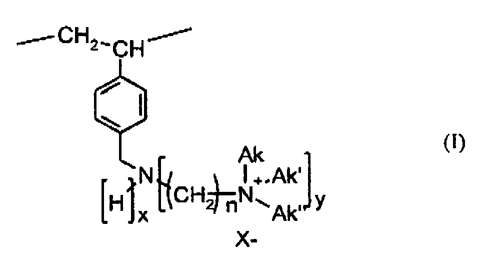 worin
Ak, Ak', Ak" jeweils unabhängig voneinander, gleich oder verschieden für einen C₁-C₁₈- Alkylrest stehen,
n für eine gerade Zahl zwischen 5 und 18 steht,
x + y = 2 und
X für Cl, Br, OH, HCO₃, HSO₄, ½ (SO₄), ½ CO₃, NO₃, F, H₂PO₄, ½ HPO₄, ⅓ PO₄ steht,
erhältlich durch Umsetzung nicht funktioneller polyvinylaromatischer Perlpolymerisate mit Phthalimidderivaten unter Nutzung von Oleum, Schwefelsäure oder Schwefeltrioxid als Katalysator, Abspalten des Phthalsäurerestes, anschließender Alkylierung der erhaltenen aminomethylierten, vernetzten Perlpolymerisate mit ω-funktionellen Alkylammoniumsalzen der allgemeinen Formel (11) 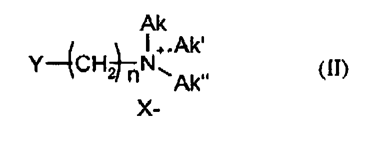 worin
n für eine ganze Zahl zwischen 5 und 18 steht,
Y für Br, Cl, I oder (SO₄)_{1/2} steht,
X⁻ für ein geeignetes Gegenion wie z.B. Cl⁻, Br⁻, I⁻, (SO₄²⁻)_{1/2}, NO₃', HCO₃⁻ steht und
Ak, Ak', Ak" jeweils unabhängig voneinander, gleich oder verschieden für eine lineare oder verzweigte Alkylgruppe mit 1 bis 18 Kohlenstoffatomen, mit oder ohne funktionellen Gruppen, stehen
und Umladung mit verschiedenen Laugen, Säuren und Salzen in die gewünschte Form.

2. Wärmestabile Anionenaustauscher gemäß Anspruch 1, **dadurch gekennzeichnet, dass** diese monodispers sind.

3. Wärmestabile Anionenaustauscher gemäß Anspruch 2, **dadurch gekennzeichnet, dass** man die Monodispersität der Perlpolymerisat Vorstufe durch Seed/Feed oder durch Jetting erhält.

4. Wärmestabile Anionenaustauscher gemäß der Ansprüche 1 oder 2, **dadurch gekennzeichnet, dass** diese makroporös sind.

5. Verfahren zur Herstellung wärmestabiler Anionenaustauscher auf Basis wenigstens eines aromatischen Monomers und wenigstens eines Vernetzers mit Strukturelementen der allgemeinen Formel (I) 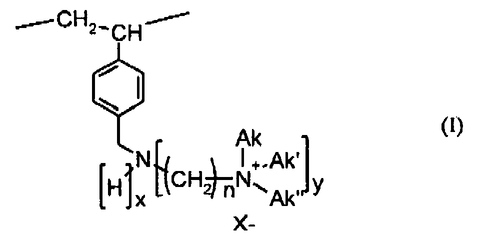 worin
Ak, Ak', Ak" jeweils unabhängig voneinander, gleich oder verschieden für einen C₁-C₁₈- Alkylrest stehen,
n für eine gerade Zahl zwischen 5 und 18 steht,
x+y=2 und
X für Cl, Br, OH, HCO₃, HSO₄, ½ (SO₄), ½ CO₃, NO₃, F, H₂PO₄, ½ HPO₄, ⅓ PO₄ steht, **dadurch gekennzeichnet, dass** man nicht funktionalisierte Perlpolymerisate
durch Suspensionspolymerisation nicht funktionalisierter Monomere aus monoethylenisch ungesättigten aromatischen Monomeren und Vernetzer erzeugt, die erhaltenen nicht funktionellen polyvinylaromatischen Perlpolymerisate mit Phthalimidderivaten unter Nutzung von Oleum, Schwefelsäure oder Schwefeltrioxid als Katalysator zu phthalimidomethylierten, vernetzten Perlpolymerisaten umsetzt, diese durch Abspalten des Phthalsäurerestes zu aminomethylierten, vernetzten Perlpolymerisaten umsetzt, diese mit ω-funktionellen Alkylammoniumsalzen der allgemeinen Formel (11) 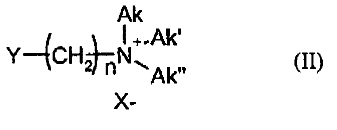 worin
n für eine ganze Zahl zwischen 5 und 18 steht,
Y für Br, Cl, I oder (SO₄)_{1/2} steht,
X⁻ für ein geeignetes Gegenion wie Cl⁻, Br⁻, I⁻, (SO₄²⁻)_{1/2}, NO₃⁻ , HCO₃⁻ steht
und
Ak, Ak', Ak" jeweils unabhängig voneinander, gleich oder verschieden für eine lineare oder verzweigte Alkylgruppe mit 1 bis 18 Kohlenstoffatomen, mit oder ohne funktionellen Gruppen,
stehen, alkyliert und durch Umladung mit verschiedenen Laugen, Säuren und Salzen in die gewünschte Form bringt.

## Claims

1. Heat-stable anion exchangers based on at least one aromatic monomer and at least one crosslinker containing the structural elements of the general formula (I) 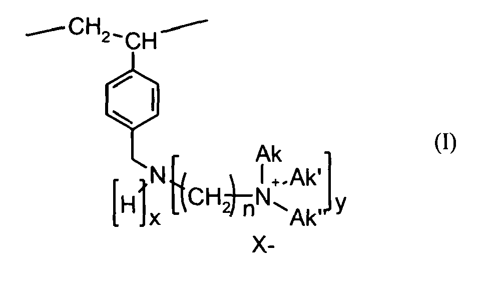 where
Ak, Ak', Ak" are in each case independently of one another identically or differently a C₁-C₁₈-alkyl radical,
n is an even number between 5 and 18,
x+y=2 and
X is Cl, Br, OH, HCO₃, HSO₄, ½ (SO₄), ½ CO₃, NO₃, F, H₂PO₄, ½ HPO₄, ½ PO₄
obtainable by reacting non-functional polyvinylaromatic polymer beads with phthalimide derivatives using oleum, sulphuric acid or sulphur trioxide as catalyst, eliminating the phthalic acid radical, subsequent alkylation of the resultant aminomethylated crosslinked polymer beads using ω-functional alkylammonium salts of the general formula (II) 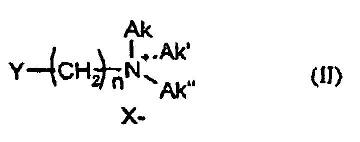 where
n is an integer between 5 and 18,
Y is Br, Cl, I or (SO₄)_{1/2},
X⁻ is a suitable counterion such as, e.g., Cl⁻, Br⁻, I⁻, (SO₄²⁻)_{1/2}, NO₃⁻, HCO₃⁻ and
Ak, Ak', Ak" are in each case independently of one another identically or differently a linear or branched alkyl group having 1 to 18 carbon atoms with or without functional groups,
and charge transfer into the desired form using various alkali metal hydroxide solutions, acids and salts.

2. Heat-stable anion exchangers according to Claim 1, **characterized in that** they are monodisperse.

3. Heat-stable anion exchangers according to Claim 2, **characterized in that** the monodispersity of the bead polymer precursor is obtained by seed/feed or by jetting.

4. Heat-stable anion exchangers according to Claims 1 or 2, **characterized in that** they are macroporous.

5. Process for producing heat-stable anion exchangers based on at least one aromatic monomer and at least one crosslinker having structural elements of the general formula (I) 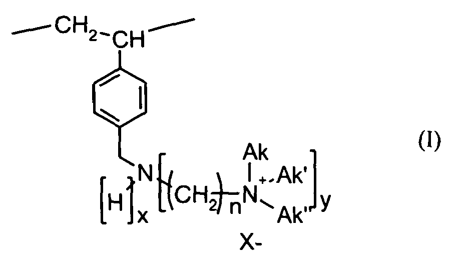 where
Ak, Ak', Ak" are in each case independently of one another identically or differently a C₁-C₁₈-alkyl radical,
n is an even number between 5 and 18,
x + y = 2 and
X is Cl, Br, OH, HCO₃, HSO₄, ½ (SO₄), ½ CO₃, NO₃, F, H₂PO₄, ½ HPO₄, ⅓ PO₄, **characterized in that** non-functionalized polymer beads are generated from monoethylenically unsaturated aromatic monomers and crosslinker by suspension polymerization of non-functionalized monomers, the resultant non-functional polyvinylaromatic polymer beads are reacted with phthalimide derivatives using oleum, sulphuric acid or sulphur trioxide as catalyst to form phthalimidomethylated crosslinked polymer beads, these are reacted by eliminating the phthalic acid radical to form aminomethylated crosslinked polymer beads, these are alkylated using ω-functional alkylammonium salts of the general formula (II) 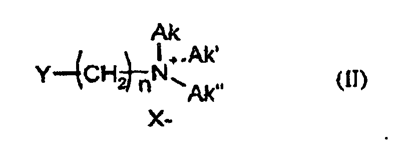
where
n is an integer between 5 and 18,
Y is Br, Cl, I or (SO₄)_{1/2},
X⁻ is a suitable counterion such as Cl⁻, Br, I⁻, (SO₄²⁻)_{1/2}, NO₃⁻, HCO₃ and
Ak, Ak', Ak" are in each case independently of one another identically or differently a linear or branched alkyl group having 1 to 18 carbon atoms, with or without functional groups,
and brought into the desired form by charge transfer using various alkali metal hydroxide solutions, acids and salts.

## Revendications

1. Échangeurs d'anions stables à la chaleur à base d'au moins un monomère aromatique et d'au moins un agent de réticulation contenant les éléments structuraux de formule générale (I) 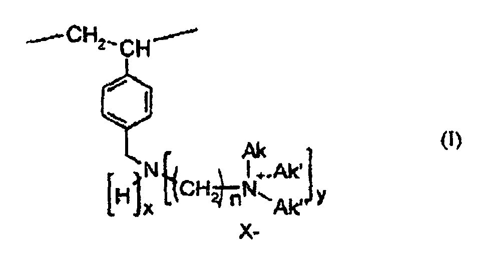 dans laquelle
Ak, Ak', Ak" identiques ou différents, représentent chacun indépendamment les uns des autres un radical alkyle en C₁-C₁₈,
n représente un nombre pair compris entre 5 et 18, x + y = 2 et
X représente Cl, Br, OH, HCO₃ , HSO₄ , ½ (SO₄) , ½ CO₃ , NO₃ , F, H₂PO₄, ½ HPO₄, ⅓ PO₄,
pouvant être obtenus par réaction de polymères en perles polyvinylaromatiques non fonctionnels avec des dérivés de phtalimide, en utilisant de l'oléum, de l'acide sulfurique ou du trioxyde de soufre en tant que catalyseur, clivage de l'ester de l'acide phtalique, alkylation ultérieure des polymères en perles aminométhylés réticulés obtenus avec des sels d'alkylammonium ω-fonctionnels de formule générale (II) 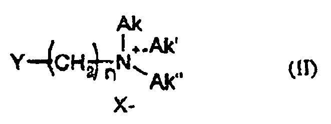 dans laquelle
n représente un nombre entier compris entre 5 et 18,
Y représente Br, Cl, I ou (SO₄)_{1/2}.
X⁻ représente un contre-ion approprié tel que p. ex. Cl⁻, Br⁻, I⁻, (SO₄²⁻) _{1/2}, NO₃⁻, HCO₃⁻ et
Ak, Ak', Ak" identiques ou différents, représentent chacun indépendamment les uns des autres un groupe alkyle linéaire ou ramifié contenant 1 à 18 atomes de carbone, avec ou sans groupes fonctionnels,
et inversion de charge avec des bases, acides et sels divers pour obtenir la forme souhaitée.

2. Échangeurs d'anions stables à la chaleur selon la revendication 1, **caractérisés en ce que** ceux-ci sont monodispersés.

3. Échangeurs d'anions stables à la chaleur selon la revendication 2, **caractérisés en ce que** la monodispersité du précurseur du polymère en perles est obtenue par Seed/Feed ou par Jetting.

4. Échangeurs d'anions stables à la chaleur selon la revendication 1 ou 2, **caractérisés en ce que** ceux-ci sont macroporeux.

5. Procédé de fabrication d'échangeurs d'anions stables à la chaleur à base d'au moins un monomère aromatique et d'au moins un agent de réticulation contenant des éléments structuraux de formule générale (I) 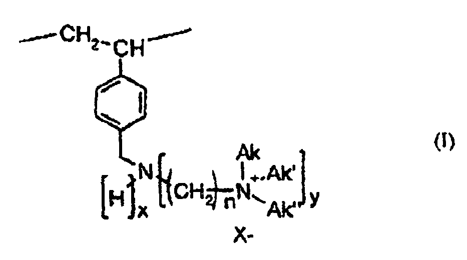 dans laquelle
Ak, Ak', Ak" identiques ou différents, représentent chacun indépendamment les uns des autres un radical alkyle en C₁-C₁₈,
n représente un nombre pair compris entre 5 et 18,
x + y = 2 et
X représente Cl, Br, OH, HCO₃ , HSO₄ , ½ (SO₄), ½ CO₃, NO₃ , F, H₂PO₄ , ½ HPO₄, ⅓ PO₄ ,
**caractérisé en ce que** des polymères en perles non fonctionnalisés sont formés par polymérisation en suspension de monomères non fonctionnalisés à partir de monomères aromatiques monoéthyléniquement insaturés et d'agents de réticulation, les polymères en perles polyvinylaromatiques non fonctionnels obtenus sont mis en réaction avec des dérivés de phtalimide en utilisant de l'oléum, de l'acide sulfurique ou du trioxyde de soufre en tant que catalyseur pour obtenir des polymères en perles phtalimidométhylés réticulés, ceux-ci sont transformés en polymères en perles aminométhylés réticulés par clivage de l'ester de l'acide phtalique, ceux-ci sont alkylés avec des sels d'alkylammonium ω-fonctionnels de formule générale (II) 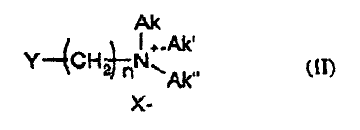 dans laquelle
n représente un nombre entier compris entre 5 et 18,
Y représente Br, Cl, I ou (SO₄)_{1/2},
X⁻ représente un contre-ion approprié tel que Cl⁻, Br⁻, I⁻, (SO₄²)_{1/2}, NO₃ , HCO₃⁻ et
Ak, Ak', Ak" identiques ou différents, représentent chacun indépendamment les uns des autres un groupe alkyle linéaire ou ramifié contenant 1 à 18 atomes de carbone, avec ou sans groupes fonctionnels,
et mis sous la forme souhaitée par inversion de charge avec des bases, acides et sels divers.
